# EUROPEAN PATENT SPECIFICATION

(11) **EP 2 930 604 B1**
(45) Date of publication and mention of the grant of the patent: **07.11.2018**
(21) Application number: 14164329.6
(22) Date of filing: 11.04.2014
(51) Int. Cl.: G06F 3/0488, G06F 3/01

(54) **Causing feedback to a user input**
Auslösung von Rückmeldung auf eine Benutzereingabe
Provoquer une réaction à une entrée d'utilisateur

(43) Date of publication of application: 14.10.2015
(73) Proprietor: Nokia Technologies Oy, 02610 Espoo (FI)
(72) Inventor: Tammi, Mikko, 33310 Tampere (FI); Backman, Juha, 02140 Espoo (FI); Järvinen, Roope, 37500 Lempäälä (FI)
(74) Representative: Cohausz & Florack

(56) References cited:
- EP-A1- 2 071 436
- EP-A2- 2 393 000
- US-A1- 2010 122 167
- US-A1- 2014 055 367

## Description

### FIELD OF THE DISCLOSURE

The invention relates to the field of feedback that is provided to a user input. It relates more specifically to causing feedback for an application that is running in a device. The device may be, for example, a mobile device.

### BACKGROUND

In general, applications for mobile devices are designed such that only one application at a time is visible on a screen. In order to enable a user to interact with an application that is currently not visible on the screen, the application has first to replace the currently visible application on the screen.

Document US 2014/055367 A1 presents an apparatus that provides for an active digital bezel area on a display of a device. Touch input may be received in a bezel area provided on the display, where user interaction with content presented within the bezel area at a location corresponding to the location of the touch input is initially disabled. A force component of the touch input may be detected and compared to a predetermined force threshold. In cases in which the force component of the touch input exceeds the predetermined force threshold, user interaction with the content at that location may be enabled. In this way, the force exerted by the user in applying a touch input in the bezel area may be considered an indication of the user's intent to interact with corresponding content within the bezel, and such interactions may be provided for accordingly. The apparatus may provide for a visual and/or haptic indication of the enablement of user interaction with the content.

Document EP 2 393 000 A2 presents a method of controlling a mobile terminal, which includes displaying a display screen; receiving a first touch input on the display screen and a second touch input on the display screen while the first touch input is touching the display screen; and executing a preset function based on the received first and second touch inputs. Haptic modules of the mobile terminal may provide haptic effects.

Document US 2010/122167 A1 presents a system and a method for controlling a mobile terminal application using a gesture. The system may identify a gesture corresponding to a contact signal input to a display screen. The gesture may then be verified as corresponding to a command event for one of many possible different applications, and command event may be performed by an application associated with the gesture. The application may be running in the background of the mobile terminal, and may not be displayed on the mobile terminal display screen when the command event is executed. The method may include executing a first application, executing a second application while executing the first application, identifying a gesture corresponding to a contact signal, verifying a command event corresponding to the gesture, and controlling the first application to perform the command event.

Document EP 2 071 436 A1 presents a portable terminal and a method for controlling the same. When it is discriminated that an input to a display unit is a first input by a pen, a function of an application allocated in advance to an area on a screen of the application specified by an input coordinate is executed on the basis of the first input. When it is discriminated that the input to the display unit is a second input by a finger, the execution of the function of the application allocated in advance on the screen of the application is prohibited and a predetermined function not allocated to the area on the screen of the application is executed on the basis of the second input.

### SUMMARY OF SOME EMBODIMENTS OF THE INVENTION

The invention is defined by the appended claims.

A method is described which comprises monitoring, by an apparatus, whether a user touches a touchscreen, while a first application is active in a device and causes a visible presentation relating to the first application on the touchscreen and while a second application is active in the device. When detecting a touch of at least one kind on the touchscreen, the method further comprises causing, by the apparatus, a tactile feedback relating to the second application.

Moreover an apparatus is described, which comprises means for realizing the actions of the presented method.

The means of the apparatus can be implemented in hardware and/or software. They may comprise for instance at least one processor for executing computer program code for realizing the required functions, at least one memory storing the program code, or both. Alternatively, they could comprise for instance circuitry that is designed to realize the required functions, for instance implemented in a chipset or a chip, like an integrated circuit. In general, the means may comprise for instance one or more processing means.

Moreover a second apparatus is described, which comprises at least one processor and at least one memory including computer program code, the at least one memory and the computer program code configured to, with the at least one processor, cause at least one apparatus at least to perform the actions of the presented method.

The presented second apparatus could thus comprise at least one processor and at least one memory including computer program code, the at least one memory and the computer program code configured to, with the at least one processor, cause at least one apparatus at least to perform: monitoring whether a user touches a touchscreen, while a first application is active in a device and causes a visible presentation relating to the first application on the touchscreen and while a second application is active in the device; and, when detecting a touch of at least one kind on the touchscreen, causing a tactile feedback relating to the second application.

Any of the described apparatuses may be a module or a component for a device, for example a chip. Alternatively, any of the mentioned apparatuses may be a mobile device or a stationary device.

Any of the described apparatuses may further comprise only the indicated components or one or more additional components.

In certain embodiments, the described method is an information providing method, and the described apparatuses are information providing apparatuses.

In certain embodiments of the described method, the method is a method for causing feedback to a user input. In certain embodiments of the described apparatuses, the apparatuses according to the first aspect are apparatuses for causing feedback to a user input.

Moreover a non-transitory computer readable storage medium is described, in which computer program code is stored. The computer program code causes at least one apparatus to perform the actions of any embodiment of the presented method.

The computer readable storage medium could be for example a disk or a memory or the like. The computer program code could be stored in the computer readable storage medium in the form of instructions encoding the computer-readable storage medium. The computer readable storage medium may be intended for taking part in the operation of a device, like an internal or external hard disk of a computer, or be intended for distribution of the program code, like an optical disc.

It is to be understood that also the respective computer program code by itself has to be considered an embodiment of the invention. The computer program code could also be distributed to several computer readable storage mediums.

It is to be understood that the presentation of the invention in this section is merely by way of example and non-limiting.

Other features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE FIGURES

- Fig. 1: is a schematic block diagram of an example embodiment of an apparatus;
- Fig. 2: is a flow chart illustrating an example embodiment of a method;
- Fig. 3: is a schematic block diagram of a further example embodiment of an apparatus;
- Fig. 4: is a flow chart illustrating an example operation of the apparatus of Figure 3;
- Fig. 5: is a schematic illustration of example control zones;
- Fig. 6: is a schematic block diagram of an example embodiment of an apparatus;
- Fig. 7: is a schematic block diagram of an example embodiment of an apparatus; and
- Fig. 8: schematically illustrates example removable storage devices.

### DETAILED DESCRIPTION OF THE FIGURES

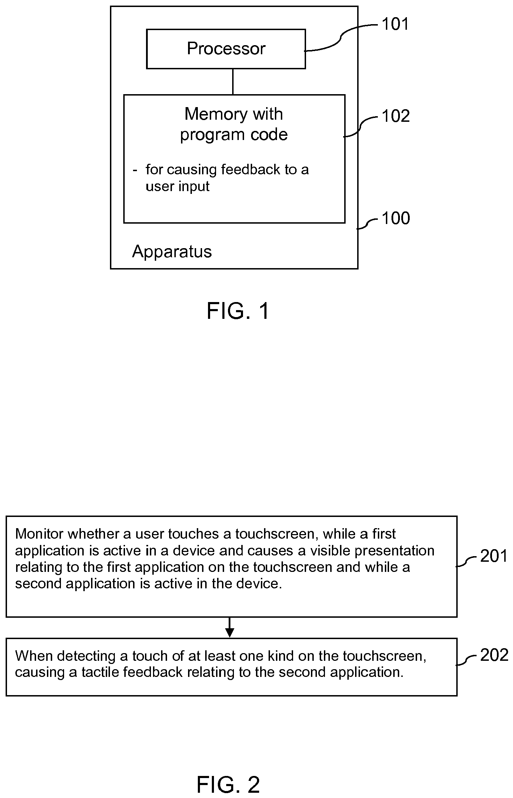

Figure 1 is a schematic block diagram of an example embodiment of any apparatus according to the invention. Apparatus 100 comprises a processor 101 and, linked to processor 101, a memory 102. Memory 102 stores computer program code for causing feedback to a user input. Processor 101 is configured to execute computer program code stored in memory 102 in order to cause an apparatus to perform desired actions. Memory 102 is thus an example embodiment of a non-transitory computer readable storage medium, in which example computer program code according to the invention is stored.

Apparatus 100 could be a mobile device, like a mobile terminal, a mobile phone, a mobile computing device, a laptop, a tablet computer or a handheld game console. It could also be a stationary device like a desktop personal computer (PC) or a domestic appliance such as a fridge. Apparatus 100 could equally be a component, like a chip, circuitry on a chip or a plug-in board, for any device. Optionally, apparatus 100 could comprise various other components, like a touchscreen, a speaker, one or more actuators for a tactile feedback, a further memory, and/or a further processor, etc.

An operation of an apparatus will now be described with reference to the flow chart of Figure 2. The operation is an example embodiment of a method according to the invention. Processor 101 and the program code stored in memory 102 cause an apparatus to perform the operation when the program code is retrieved from memory 102 and executed by processor 101. The apparatus that is caused to perform the operation can be apparatus 100 or some other apparatus, for example but not necessarily a device comprising apparatus 100.

The apparatus monitors whether a user touches a touchscreen, while a first application is active in a device and causes a visible presentation relating to the first application on the touchscreen and while a second application is active in the device, (action 201) The monitoring can be based for example on signals provided by the touchscreen. The presentation of visible information on the touchscreen is to be understood to be a presentation of visible information on a display window of the touchscreen. The second application may cause at this time for example no visible presentation on the touchscreen, or it may cause for example a visible presentation that uses a smaller area than the visible presentation relating to the first application.

The apparatus furthermore causes a tactile feedback relating to the second application, when a touch of at least one kind on the touchscreen is detected, (action 202) At the same time, the first application may continue causing a visible presentation relating to the first application on the touchscreen. The second application may still cause no visible presentation on the touchscreen when a touch is detected and a haptic feedback is provided, or it may still or newly cause a visible presentation that is smaller than the visible presentation relating to the first application. The tactile feedback could also be referred to as haptic feedback.

The invention is based on the consideration that some targeted interactions with applications may be relatively simple so that it might not be necessary to display information for the application on a screen in order to enable a user to interact with the application, or to display information for the application only to a very limited extent.

Certain embodiments of the first aspect of the invention thus provide that two or more applications are run simultaneously in a device such that at least information relating to one of the applications is visible on the screen. A tactile feedback for the other active application is provided to a user touching a touchscreen.

Certain embodiments of the invention may have the effect that a user may interact with an active background application without affecting the visual perception of an active foreground application or at least without affecting it substantially. If there is no or only a limited visible presentation relating to the second application on the touchscreen, for example on an edge or in a corner of the touchscreen, the visible presentation relating to the first application on the touchscreen may be continued without disruption.

Apparatus 100 illustrated in Figure 1 and the method illustrated in Figure 2 may be implemented and refined in various ways.

The touch of at least one kind that is detected can be defined as desired. A detected touch results in different tactile feedback depending on the kind of touch, the location of touch and/or the state of the device.

In an example embodiment, the touch of at least one kind could comprise any kind of touch gesture. In an example embodiment, the touch of at least one kind could comprise a tap or another predetermined gesture, like a swipe. A tap could be a single tap or a multi tap, and it could optionally require a contact with the touchscreen shorter than a predetermined length or longer than a predetermined length for being considered the touch of the at least one kind. A predetermined gesture could allow differentiating the touch of the at least one kind easily from any other touch that might be allowed for controlling the first application in a particular state of the device. A swipe could also allow evaluating the length of the swipe as additional information associated with the touch. The touch of at least one kind could furthermore comprise a swipe in a predetermined direction. This could allow differentiating between swipes in different directions as additional information associated with the touch. The touch of at least one kind could furthermore comprise a touch applied with a predetermined force. This could allow differentiating between touches that are applied with different forces as additional information associated with the touch. The touch of at least one kind could furthermore comprise a touch in a predetermined area of the touchscreen. This could allow reacting in a different manner to touches in different areas and/or reserving certain areas of the touchscreen for the first application. The touch of at least one kind could furthermore comprise a touch of a single location of the touchscreen and/or a simultaneous touch of at least two distinct locations of the touchscreen, that is, a multi-finger touch.

In an example embodiment, a detected touch of at least one kind is an input for controlling the second application. Alternatively, a detected touch of at least one kind could be for example a touch enabling a user to check the second application for notifications. If the presented method is to be used only for enabling a user to check the second application for notifications, a tactile feedback could even be caused upon any detected touch, including any touch that is used for interacting with the first application.

In an example embodiment, the presented method further comprises activating a user interface for the second application when the touch of at least one kind is detected. This may have the effect that after the activation, any input via the touchscreen can be associated with the second application. In an example embodiment, the presented method further comprises deactivating a user interface for the second application, when the touch of at least one kind is detected. This may have the effect that after the deactivation, only a predetermined kind of touch, like an activating touch, can be considered to relate to the second application. In an example embodiment, the presented method further comprises switching between a user interface for the first application and a user interface for the second application, when the touch of at least one kind is detected. This may have the effect that the user may decide for which application the touchscreen is currently to be used as input means. In an example embodiment, the presented method further comprises modifying at least one property of the second application associated with the kind of the detected touch, when the touch of at least one kind is detected. The property may be of any desired kind. It could be for instance the volume of an audible output that is caused by the second application, a muting state of any audible output that is caused by the second application, a currently selected audible output item, etc. In an example embodiment, the presented method further comprises modifying at least one property of the second application associated with a control zone in which the touch is detected, when the touch of at least one kind is detected. This may have the effect that - even though no information about the second application is displayed on the touchscreen - different kinds of control may be enabled via different control zones. Alternatively or in addition, it might be possible to associate different control zones with different applications.

In an example embodiment, the tactile feedback constitutes a notification of a predetermined event occurring in the scope of the second application. If the second application is a messaging application, for example, this could be a notification of an incoming message; if the second application is a calendar application, for example, this could be a notification of an appointed time. In an example embodiment, the tactile feedback constitutes a notification of a detection of a touch of a user on the touchscreen. This may have the effect that a user is made aware that the touch has been registered, which may be of particularly use to the user if there is no visual feedback to a touch. In an example embodiment, the tactile feedback constitutes a notification of a detection of a kind of a touch of a user on the touchscreen that is defined for activating a user interface of the second application. This may have the effect that the user is made aware that the next touch of the touchscreen will be associated with the second application. In an example embodiment, the tactile feedback constitutes a notification of a detection of a kind of a touch of a user on the touchscreen that is defined for controlling the second application. In an example embodiment, the tactile feedback constitutes a notification of completion of an action triggered by a detected touch of a user on the touchscreen. In an example embodiment, the tactile feedback constitutes a notification of a progress of an action triggered by a detected touch of a user on the touchscreen. In an example embodiment, the tactile feedback constitutes a notification of a detection of a touch of at least one kind of a user in one of at least one control area on the touchscreen that is defined for controlling the second application. This may have the effect that the user can be informed that the detected touch is in an area provided for a control of the second application. In an example embodiment, the tactile feedback constitutes a notification of a detection of a touch of at least one kind of a user outside of one of at least one control area on the touchscreen that is defined for controlling the second application. This may have the effect that the user may be guided to the defined control areas for controlling the second application.

In an example embodiment, different control zones are defined on the touchscreen for the second application and a different tactile feedback is defined for a detected touch in different control zones. This may have the effect that a fairly complex control of the second application is enabled without any visual feedback or without any significant visual feedback, which can nevertheless be understood fairly quickly and intuitively by the user. The difference may lie in at least one employed frequency, in an employed pattern or in an employed envelope that is used for the tactile feedback. A different pattern could be achieved for instance with pulses of different lengths. It is to be understood that different tactile feedback can be provided in general for different notifications. A differentiation between control zones and non-control zones could also be achieved by providing different tactile feedback; however, it would also be possible to indicate a control zone by tactile feedback and a non-control zone by a lack of tactile feedback, or to indicate a non-control zone by tactile feedback and a control zone by a lack of tactile feedback.

In an example embodiment, the tactile feedback is provided by a single actuator. A single actuator could move for example the entire display window of the touchscreen for providing a tactile feedback. If particular feedback is provided only while the user touches predefined areas of the screen, the user may get the impression that the particular feedback is provided only in these areas of the screen. In an example embodiment, the tactile feedback is provided by at least one actuator that is configured to provide tactile feedback and audible feedback using different frequency bands. This may have the effect that the at least one actuator can be employed for different purposes. In an example embodiment, the tactile feedback is provided by a plurality of actuators. This may have the effect that differentiated feedback may be provided, either locally or as concerns the kind of the feedback. In an example embodiment, the tactile feedback is provided by a plurality of actuators associated with different areas of the touchscreen, and the tactile feedback is provided by at least one of the actors associated with an area of the touchscreen currently touched by the user. This may have the effect that differentiated feedback may be provided for different areas, which may refine the impression of localized feedback.

The at least one actuator could be of any desired kind. It could comprise for instance at least one piezoelectric transducers or at least one electromechanical actuator. The at least one actuator could be attached for example to the back of a touch sensitive surface of the touchscreen.

In an example embodiment, the tactile feedback is obtained by converting a sound signal that is generated by the second application to vibrations. For example, the second application could be suited to be operated in a first mode, in which at least sound is to be output as a feedback, and in a second mode, in which tactile feedback is to be output instead of sound. In both cases, the second application could generate the sound signals. In the second mode, however, the sound signals are not output. Instead, the signals are processed to obtain vibrations that can be felt instead of heard. The vibrations may be matched to the sound. The processing could comprise a splitting of frequencies, an isolating of frequencies, a reshaping of frequencies, a shifting of frequencies and/or a mapping of frequencies. The sound signals could be converted into vibrations by the active second application or by some other application that is configured to perform such conversion for various second applications.

In an example embodiment, a different frequency band is used for any feedback relating to the first application than for the tactile feedback relating to the second application. The tactile feedback relating to the second application could use for example a lower frequency band than any feedback - including possible audible feedback - relating to the first application. The frequency band that is used for the tactile feedback for the second application could be selected for example in any range below 300 Hz. At frequencies below about 300 Hz, the tactile sensation is mostly related to the displacement of the surface of the display window, and the sensitivity decreases above that frequency range, while at the same frequencies the sound radiation is related to the (volume) acceleration of the vibrating surface. Thus, limiting the tactile feedback for the second application to the lower frequencies, and at the same time possibly removing the lowest frequency content from other signals going to the same actuator(s), the haptic and non-haptic interactions can be kept perceptually separate. Measurements and listening experience from Tactile Audio Devices indicate this kind of behavior, where the acoustic output below the lowest diaphragm resonance (typically 300 - 600 Hz) is very poor, but the vibration is easy to feel (see K. Kyung, M. Ahn, D. Kwon and M. Srinivasan: "Perceptual and biomechanical frequency response of human skin: implication for design of tactile displays" in Proceedings of the First Joint Eurohaptics Conference and Symposium on Haptic Interfaces for Virtual Environment and Teleoperator Systems, 2005.). Also the spatial distribution of the surface vibration changes around the resonance so that at the lowest frequencies there is simple bending with some vibration at every point of the surface, while at higher frequencies where the acoustical output is more significant the vibration pattern becomes more irregular so that lower frequencies may be better suited for consistent tactile feedback in example embodiments.

Alternatively or in addition, a different pattern could be used for any feedback relating to the first application than for the tactile feedback relating to the second application. Alternatively or in addition, a different envelope could be used for any feedback relating to the first application than for the tactile feedback relating to the second application.

Any of these approaches using a different feedback for the first application and the second application may have the effect that the tactile feedback for the second application can be clearly differentiated by a user from any feedback for the first application such that a user is all the time aware which application the user is interacting with.

In an example embodiment, at least a third application could be run simultaneously with the first and second application in the device. In this case, a tactile feedback relating to the at least third application to a user touching the touchscreen could equally be provided. This may have the effect that the user could monitor and/or control several applications without interrupting the visual presentation for the first application.

In an example embodiment, the presented apparatus comprises a touchscreen. In an example embodiment, the presented apparatus comprises an actuator configured to provide a tactile feedback. In an example embodiment, the presented apparatus comprises a plurality of actuators associated with different areas of a touchscreen and configured to provide a tactile feedback.

The touchscreen can be for example a tactile audio display, which is a device where the display window is mechanically driven with one or more actuators.

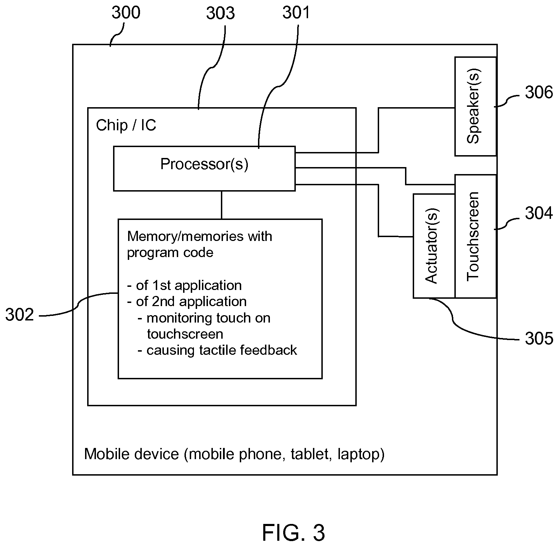

Figure 3 is a schematic block diagram of an example mobile device 300.

Mobile device 300 could be for example a mobile phone like a smartphone, or some other mobile terminal, such as a tablet computer or a laptop, etc. It comprises a processor 301 that is linked to a memory 302, to a touchscreen 304, to actuators 305 and to at least one speaker 306.

Processor 301 is configured to execute computer program code, including computer program code stored in memory 302, in order to cause mobile device 300 to perform desired actions. It is to be understood that processor 301 may comprise or be connected to a random access memory as a working memory for supporting its operation.

Memory 302 stores computer program code of a first application and computer program code of a second application. The computer program code of the second application comprises code for monitoring user input via touchscreen 304 and code for causing a tactile feedback via actuators 305. The computer program code of the second application may be an example embodiment of the computer program code according to the invention. In addition, memory 302 may store computer program code implemented to realize other functions, as well as any kind of other data.

The code for monitoring user input via touchscreen 304 and for causing a tactile feedback could partly or entirely also be separate computer program code that is provided for use with several applications. In this case, it could comprise additional code for interacting with the applications.

Processor 301 and memory 302 may optionally belong to a chip or an integrated circuit 303, which may comprise in addition various other components, for instance a further processor or memory.

Touchscreen 304 is a display with touch sensitive display window and could use any available current or future technology for sensing a touch of a user, for example a capacitive or a resistive touch sensing technology, a surface acoustic wave (SAW) technology or an optical imaging technology. In the case of a capacitive touch sensing technology, for example, touchscreen 304 could comprise a display window for the visual presentation of information, a touch sensitive film attached to the back of the display window and control circuitry. The control circuitry could be configured to cause the display window to display the desired information based on input from processor 301, and it could be configured to collect signals from the touch sensitive film and to provide corresponding data to processor 301.

Mobile device 300 could comprise various other components, like a microphone or a communication interface.

Component 303 or mobile device 300 could correspond to example embodiments of any apparatus according to the invention.

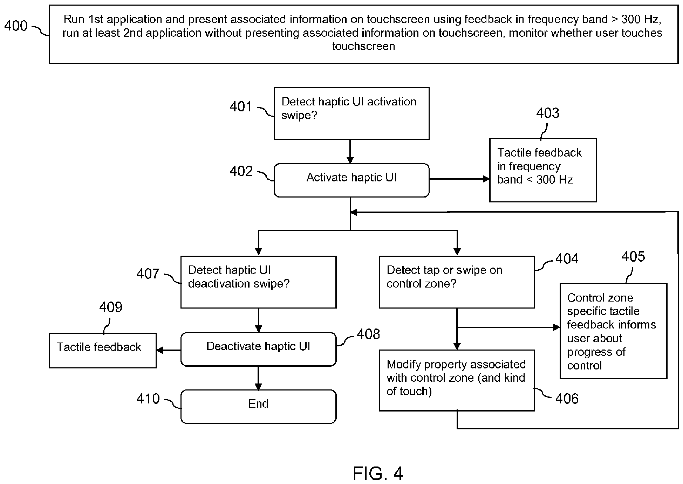

Example operations in mobile device 300 of Figure 3 will now be described with reference to Figure 4. Processor 301 and some of the program code stored in memory 302 cause mobile device 300 to perform the operations presented in Figure 4, when program code is retrieved from memory 302 and executed by processor 301. These operations could represent an example embodiment of a method according to the invention.

A first application is run by device 300 and thus active. Information relating to the first application is presented on touchscreen 304. The first application could be for instance an Internet browser application that is used by a user for browsing a golf equipment catalog. The first application could be designed to cause a feedback to a user in predefined situations using a frequency band above 300 Hz.

A second application is equally run by device 300 and thus active, but no information relating to the second application is currently presented on touchscreen 304. There may be generally no visual information relating to the second application, or the second application may have a mode in which no visual information is presented. It is to be understood that in an alternative embodiment, the second application could provide limited visual information, for example a mere indication that it is active or an indication of its state. Such limited visual information relating to the second application could be provided all the time while the second application is active in the background or only under certain conditions, like upon a certain event relating to the second application. The second application could be for example an application that provides access to a music service provided by the device manufacturer that enables the user to listen to music provided by the service.

Device 300 monitors, whether the user touches touchscreen 304. (action 400)

In this situation, device 300 may detect a touch and determines whether the touch is specifically a haptic user interface (UI) activation swipe. Such a swipe may be any desired swipe predetermined in the computer program code, like a swipe from left to right, a swipe from top to bottom or a diagonal swipe from top left to bottom right, etc. The predetermined swipe could furthermore require a swipe in a predetermined area of touchscreen 304. If device 300 detects a touch that does not correspond to the defined haptic UI activation swipe, it is determined whether the touch is a control touch for the first application and if so, a corresponding action is taken. In addition, a feedback in the frequency band assigned to the first application may be provided using actuators 305. Otherwise no action is taken.

If device 300 detects that the detected touch corresponds to the predetermined haptic UI activation swipe (action 401) device 300 activates a haptic UI for the second application. (action 402) Activation of the haptic UI may be confirmed to the user by a tactile feedback about the activation, (action 403) Once the haptic UI for the second application is activated, the possibility of entering commands for the first application via the touch screen is disabled.

For example, when the music service starts to play a new song, which the user does not like, he may perform the haptic UI activation swipe in order to activate the haptic UI for the music service application. The swipe may be for instance a special two finger swipe, in order to ensure that it can be clearly differentiated from any touch input that could be used for controlling the browser application.

The tactile feedback may be in the form of a vibration in a frequency range below 300 Hz. The exact frequency, the amplitude, the duration, a used pattern and/or a used modulating envelope for the vibration may optionally be defined specifically for this confirmation. In case there is a plurality of actuators 305, the tactile feedback may be generated by one or more actuators that are closest to the areas that are being touched by the user in the haptic UI activation swipe as soon as the swipe has been detected. Otherwise, the entire touchscreen may be caused to vibrate as soon as the swipe has been detected.

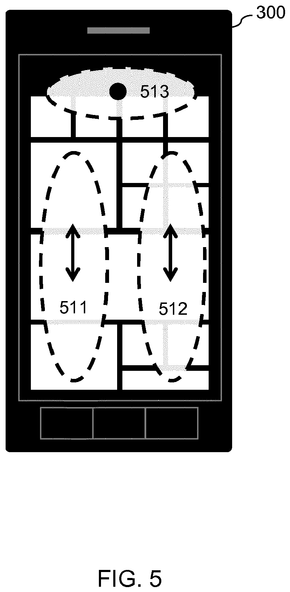

An example haptic UI for the second application that could be activated in action 402 is illustrated in Figure 5.

Figure 5 schematically presents a smart phone as an example mobile device 300. The smart phone comprises a touchscreen, which may present tiles of a graphical menu or information of some other first application, like a browser. An example structure of a haptic UI is illustrated with bold dashed lines. There may be three separate control zones for controlling the second application, for example a music service application. A first zone 511 covers approximately the lower three quarters of the left hand side of the touchscreen. It is provided for a scrolling function, such as changing a song of the music service application. A vertical double headed arrow indicates that this zone is used by swiping up or down for scrolling in a desired direction. A second zone 512 covers approximately the lower three quarters of the right hand side of the touchscreen. It is provided for a further scrolling function, such as changing the volume of the music service application. A vertical double headed arrow indicates that this zone is used by swiping up or down for scrolling in a desired direction. A third zone 513 covers approximately the upper quarter of the touchscreen. It is provided for a switching function, like switching the music player provided by the music service application on or off. A dot indicates that this zone is used by simple tapping.

It is to be understood that any other distribution of control zones could be used just the same. For instance, a control zone for skipping songs could also be provided in the top region of the touchscreen.

Coming back to Figure 4, device 300 may now monitor whether a user touches touchscreen 304 again.

If a further touch is detected, device 300 determines the kind of the touch. It may determine for example, whether it is a touch that is provided for controlling the second application, a touch that is provided for deactivating the haptic UI, or a touch without associated function.

If device 300 detects a tap or swipe in a control zone defined for the haptic UI (action 404), device 300 modifies a property of the second application that is associated with the control zone and the kind of detected touch (action 405) and causes a tactile feedback that informs the user about the progress of the control (action 406).

For example, a property of the second application may be the currently playing song. With the example haptic UI of Figure 5, the user may swipe up or down in zone 511, if he wishes to skip a song or to move forward or backwards in a sequence of songs. There may be a sequence of pulses as a tactile feedback, the length of the sequence corresponding to the number of skipped songs.

For example, a property of the second application may be the volume of a song. With the example haptic UI of Figure 5, the user may swipe up in zone 512, if he wishes to increase the volume of the output and swipe down in zone 512, if he wishes to lower the volume of the output. The haptic feedback may increase in amplitude or frequency when a swipe up is detected and the volume is being modified. The haptic feedback may decrease in amplitude or frequency when a swipe down is detected and the volume is being modified.

For example, a property of the second application may be a player being turned on or off. With the example haptic UI of Figure 5, the user may tap in zone 513, if he wishes to switch the player on or off. The haptic feedback may be different when the player is switched from on to off than when it is turned from off to on.

The type of tactile feedback can be set different for every zone such that a user may easily learn whether he is using the correct zone for a desired type of control. In any case, the tactile feedback may use a frequency range below 300 Hz, in order to indicate to the user that the haptic UI for the second application is still active.

It would also be possible to define and provide a tactile feedback for areas which are not in use for the second application. It would also be possible to define and provide a tactile feedback to inform a user that he entered a control zone which is in use for the second application when moving a finger on the screen, which may be different from a haptic feedback that is provided when a touch detected in the zone causes or caused a change of property.

If device 300 detects a touch that does not correspond to any tap or swipe in a control zone as defined for the haptic UI, the touch may be a haptic UI deactivation swipe. A haptic UI deactivation swipe could be for example identical to the haptic UI activation swipe or reverse to the haptic UI activation swipe, in order to make the use easy and intuitive to the user. Such a relation is not necessary, though.

If device 300 detects a haptic UI deactivation swipe (action 407), it deactivates the haptic UI for the second application (action 408). The possibility of entering commands for the first application via touchscreen 304, in contrast, is enabled again.

The user is informed by means of a tactile feedback that the command has been detected. (action 409) Thus, as soon as the user feels the tactile feedback, the swipe may be ended. The tactile feedback may be again in a frequency range below 300 Hz.

The operation is then completed, (action 410) It may start again, as long as the second application is still active in the background and device 300 monitors whether the user touches the touchscreen. (action 400)

During all the operations illustrated in Figure 4, the user is able to simultaneously study the visual information of the first application that is continuously presented on the screen, since no visual information - or in an alternative embodiment very limited visual information - relating to the second application is presented on touchscreen 304. If there is limited visual information for the second application on the screen, this information could be present for instance all of the time, or it could be presented for instance only while the haptic UI is activated.

It is to be understood that the operation presented in Figure 4 could be modified in many ways and that the order of actions could be changed.

For example, a second application might be activated and deactivated entirely with a predefined gesture while a first application is presenting information, not only a haptic UI for the second application.

It would also be possible to run more than one background application in parallel in addition to the first application. Different swipe gestures could then be defined for activating a haptic UI for different background applications.

First and second application could be of any kind. A first application could also be for example an e-book, while a second application could also be a messaging service, which provides a tactile feedback upon a touch of the user on the touchscreen when a new message is available. A user could then decide whether or not to read the message; or a user could activate a haptic UI for the messaging application in order to cause one or more messages to be read aloud via speakers 306, which might be less disruptive to the lecture than switching between visual presentations.

Certain embodiments thus enable the use of a background user interface.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (i) to a combination of processor(s) or (ii) to portions of processor(s)/ software (including digital signal processor(s)), software, and memory(ies) that work together to cause an apparatus, such as a mobile phone, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or portion of a processor and its (or their) accompanying software and/or firmware. The term 'circuitry' also covers, for example, a baseband integrated circuit or applications processor integrated circuit for a mobile phone.

Any of the processors mentioned in this text could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Any of the memories mentioned in this text could be implemented as a single memory or as a combination of a plurality of distinct memories, and may comprise for example a read-only memory (ROM), a random access memory (RAM), a flash memory or a hard disc drive memory etc.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

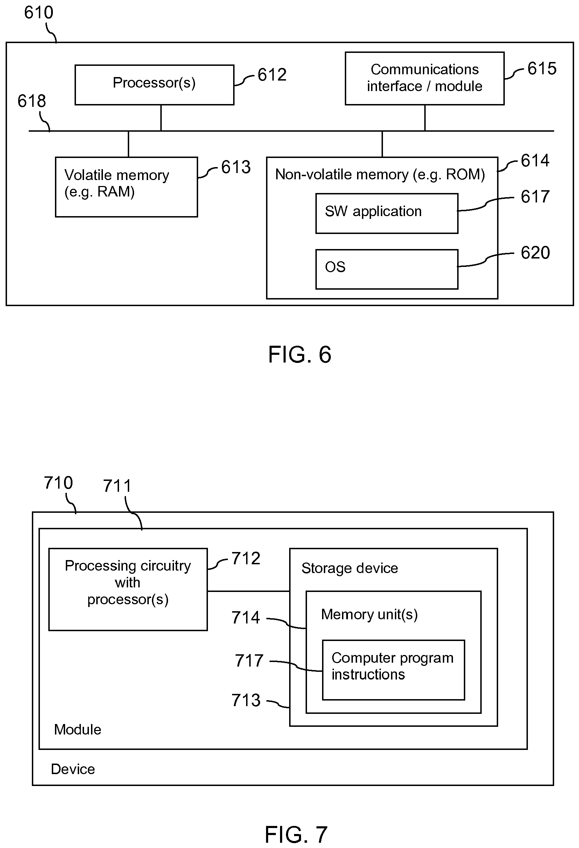

Example embodiments using at least one processor and at least one memory as a non-transitory data medium are shown in Figures 6 and 7.

Figure 6 is a schematic block diagram of a device 610. Device 610 includes a processor 612. Processor 612 is connected to a volatile memory 613, such as a RAM, by a bus 618. Bus 618 also connects processor 612 and RAM 613 to a non-volatile memory 614, such as a ROM. A communications interface or module 615 is coupled to bus 618, and thus also to processor 612 and memories 613, 614. Within ROM 614 is stored a software (SW) application 617. Software application 617 may be a navigation application, although it may take some other form as well. An operating system (OS) 620 also is stored in ROM 614.

Figure 7 is a schematic block diagram of a device 710. Device 710 may take any suitable form. Generally speaking, device 710 may comprise processing circuitry 712, including one or more processors, and a storage device 713 comprising a single memory unit or a plurality of memory units 714. Storage device 713 may store computer program instructions that, when loaded into processing circuitry 712, control the operation of device 710. Generally speaking, also a module 711 of device 710 may comprise processing circuitry 712, including one or more processors, and storage device 713 comprising a single memory unit or a plurality of memory units 714. Storage device 713 may store computer program instructions 717 that, when loaded into processing circuitry 712, control the operation of module 711.

The software application 617 of Figure 6 and the computer program instructions 717 of Figure 7, respectively, may correspond e.g. to the computer program code in memory 102 or memory 302.

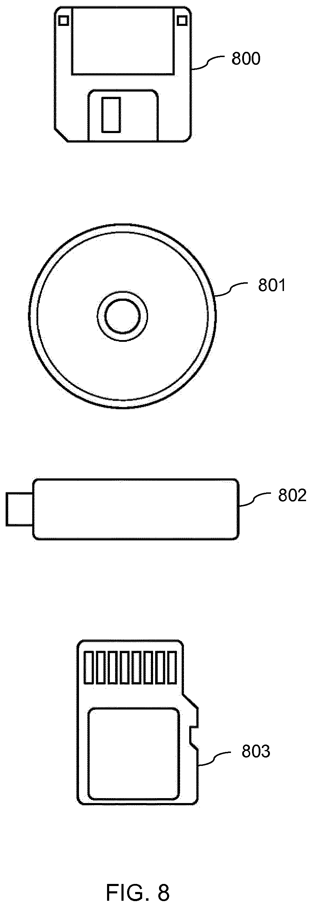

In example embodiments, any non-transitory computer readable medium mentioned in this text could also be a removable/portable storage or a part of a removable/portable storage instead of an integrated storage. Example embodiments of such a removable storage are illustrated in Figure 8, which presents, from top to bottom, schematic diagrams of a magnetic disc storage 800, of an optical disc storage 801, of a semiconductor memory circuit device storage 802 and of a Micro-SD semiconductor memory card storage 803.

The functions illustrated by processor 101 in combination with memory 102, by processor 301 in combination with memory 302, or by module 303 can also be viewed as means for monitoring whether a user touches a touchscreen, while a first application is active and causes a visible presentation relating to the first application on the touchscreen and while a second application is active; and as means for causing, a tactile feedback relating to the second application, when detecting a touch of at least one kind of a user on the touchscreen.

The program codes in memories 102 and 302 can also be viewed as comprising such means in the form of functional modules.

Figures 2 and 4 may also be understood to represent example functional blocks of computer program codes supporting a causing of tactile feedback.

It will be understood that all presented embodiments are only examples, and that any feature presented for a particular example embodiment may be used with any aspect of the invention on its own or in combination with any feature presented for the same or another particular example embodiment and/or in combination with any other feature not mentioned. It will further be understood that any feature presented for an example embodiment in a particular category may also be used in a corresponding manner in an example embodiment of any other category.

## Claims

1. A method comprising:
monitoring, by an apparatus (300, 303), whether a user touches a touchscreen (304), while a first application is active in a device (300) and causes a visible presentation relating to the first application on the touchscreen (304) and while a second application is active in the device (300); and
when detecting a touch of at least one kind on the touchscreen (304), causing, by the apparatus (300, 303), a tactile feedback relating to the second application, wherein
the tactile feedback is one of different tactile feedbacks to a detected touch on the touchscreen (304) that are defined for different notifications relating to the second application, and
wherein said detected touch results in different tactile feedback depending on the kind of touch, the location of touch and/or the state of the device.

2. The method according to claim 1, wherein the detected touch of at least one kind constitutes an input for controlling the second application.

3. The method according to claim 1 or 2, wherein the touch of at least one kind comprises at least one of:
a tap;
a predetermined gesture;
a swipe;
a swipe in a predetermined direction;
a touch applied with a predetermined force;
a touch in a predetermined area of the touchscreen (304);
a touch of a single location of the touchscreen (304); and
a simultaneous touch of at least two distinct locations of the touchscreen (304).

4. The method according to one of claims 1 to 3, further comprising, when detecting the touch of at least one kind, one of:
activating of a user interface for the second application;
deactivating of a user interface for the second application;
switching between a user interface for the first application and a user interface for the second application;
modifying at least one property of the second application associated with the kind of the detected touch; and
modifying at least one property of the second application associated with a control zone in which the touch is detected.

5. The method according to one of claims 1 to 4, wherein the different tactile feedbacks are defined for at least two of:
a notification of a predetermined event occurring in the scope of the second application;
a notification of a detection of a touch of a user on the touchscreen (304);
a notification of a detection of a kind of a touch of a user on the touchscreen (304) that is defined for activating a user interface of the second application;
a notification of a detection of a kind of a touch of a user on the touchscreen (304) that is defined for controlling the second application;
a notification of completion of an action triggered by a detected touch of a user on the touchscreen (304);
a notification of a progress of an action triggered by a detected touch of a user on the touchscreen (304);
a notification of a detection of a touch of at least one kind of a user in one of at least one control area on the touchscreen that is defined for controlling the second application; and
a notification of a detection of a touch of at least one kind of a user outside of one of at least one control area on the touchscreen that is defined for controlling the second application.

6. The method according to one of claims 1 to 5, wherein the second application defines different control zones (511, 512, 513) on the touchscreen (304) and wherein a different tactile feedback is defined for a detected touch in different control zones (511, 512, 513).

7. The method according to one of claims 1 to 6, wherein the caused tactile feedback is provided by one of:
a single actuator (305);
at least one actuator that is configured to provide tactile feedback and audible feedback using different frequency bands;
a plurality of actuators (305); and
a plurality of actuators (305) associated with different areas of the touchscreen (304), wherein the tactile feedback is provided by at least one of the actors associated with an area of the touchscreen (304) touched by the user.

8. The method according to one of claims 1 to 7, wherein the caused tactile feedback is obtained by converting a sound signal that is generated as a feedback by the second application to vibrations.

9. The method according to one of claims 1 to 8, further comprising using at least one of:
a different frequency band for any feedback relating to the first application than for the caused tactile feedback relating to the second application;
a different pattern of any feedback relating to the first application than for the caused tactile feedback relating to the second application; and
a different envelope for any feedback relating to the first application than for the caused tactile feedback relating to the second application.

10. The method according to one of claims 1 to 9, further comprising
running at least a third application in the device; and
providing a tactile feedback relating to the at least third application to a user touching the touchscreen.

11. An apparatus (300, 303) comprising means (301, 302, 304, 305) for performing each of the steps of the method of any of claims 1 to 10.

12. The apparatus (300) according to claim 11, wherein the apparatus comprises at least one of:
a touchscreen (304);
an actuator (305) configured to provide a tactile feedback; and
a plurality of actuators (305) associated with different areas of a touchscreen (304) and configured to provide a tactile feedback.

13. The apparatus according to claim 11 or 12, wherein the apparatus is one of:
a mobile terminal (300);
a mobile device (300);
a mobile phone (300);
a personal computer (300);
a chip (303) configured to be used in a device (300); and
a component (303) configured to be used in a device (300).

14. A computer program code, the computer program code when executed by a processor (301) causing at least one apparatus (300) to perform each of the steps of the method of any of claims 1 to 10.

## Patentansprüche

1. Verfahren, das umfasst:
das Überwachen durch eine Vorrichtung (300, 303), ob ein Benutzer einen Touchscreen (304) berührt, während eine erste Anwendung in einem Gerät (300) aktiv ist und eine sichtbare Darstellung bezüglich der ersten Anwendung auf dem Touchscreen (304) auslöst und während eine zweite Anwendung in dem Gerät (300) aktiv ist; und
wenn eine Berührung mindestens einer Art auf dem Touchscreen (304) erfasst wird, das Auslösen, durch die Vorrichtung (300, 303), einer taktilen Rückmeldung bezüglich der zweiten Anwendung,
wobei
die taktile Rückmeldung eine von verschiedenen taktilen Rückmeldungen auf eine erfasste Berührung auf dem Touchscreen (304) ist, die für verschiedene Benachrichtigungen bezüglich der zweiten Anwendung definiert sind, und wobei die erfasste Berührung eine verschiedene taktile Rückmeldung abhängig von der Art der Berührung, der Stelle der Berührung und/oder dem Zustand des Geräts zur Folge hat.

2. Verfahren nach Anspruch 1, wobei die erfasste Berührung mindestens einer Art eine Eingabe zum Steuern der zweiten Anwendung darstellt.

3. Verfahren nach Anspruch 1 oder 2, wobei die Berührung mindestens einer Art mindestens eines der folgenden Elemente umfasst:
ein Tippen;
eine vorbestimmte Geste;
ein Wischen;
ein Wischen in eine vorbestimmte Richtung;
ein Berühren, das mit einer vorbestimmten Kraft erfolgt;
ein Berühren in einem vorbestimmten Bereich des Touchscreens (304);
ein Berühren einer einzelnen Stelle des Touchscreens (304); und
ein gleichzeitiges Berühren von mindestens zwei eindeutigen Stellen des Touchscreens (304).

4. Verfahren nach einem der Ansprüche 1 bis 3, ferner umfassend, wenn die Berührung mindestens einer Art erfasst wird, eines der folgenden Elemente:
das Aktivieren einer Benutzerschnittstelle für die zweite Anwendung;
das Deaktivieren einer Benutzerschnittstelle für die zweite Anwendung;
das Umschalten zwischen einer Benutzerschnittstelle für die erste Anwendung und einer Benutzerschnittstelle für die zweite Anwendung;
das Modifizieren mindestens einer Eigenschaft der zweiten Anwendung, die der Art der erfassten Berührung zugeordnet ist; und
das Modifizieren mindestens einer Eigenschaft der zweiten Anwendung, die einer Steuerzone, in der die Berührung erfasst wird, zugeordnet ist.

5. Verfahren nach einem der Ansprüche 1 bis 4, wobei die verschiedenen taktilen Rückmeldungen für mindestens zwei der folgenden Elemente definiert sind:
eine Benachrichtigung bezüglich eines vorbestimmten Ereignisses, das im Rahmen der zweiten Anwendung auftritt;
eine Benachrichtigung bezüglich einer Erfassung einer Berührung eines Benutzers auf dem Touchscreen (304);
eine Benachrichtigung bezüglich einer Erfassung einer Art einer Berührung eines Benutzers auf dem Touchscreen (304), die zum Aktivieren einer Benutzerschnittstelle der zweiten Anwendung definiert ist;
eine Benachrichtigung bezüglich einer Erfassung einer Art einer Berührung eines Benutzers auf dem Touchscreen (304), die zum Steuern der zweiten Anwendung definiert ist;
eine Benachrichtigung bezüglich des Abschlusses einer Aktion, die durch eine erfasste Berührung eines Benutzers auf dem Touchscreen (304) ausgelöst wird;
eine Benachrichtigung bezüglich eines Fortschritts einer Aktion, die durch eine erfasste Berührung eines Benutzers auf dem Touchscreen (304) ausgelöst wird;
eine Benachrichtigung bezüglich einer Erfassung einer Berührung mindestens einer Art eines Benutzers in einem von mindestens einem Steuerbereich auf dem Touchscreen, der zum Steuern der zweiten Anwendung definiert ist; und
eine Benachrichtigung bezüglich einer Erfassung einer Berührung mindestens einer Art eines Benutzers außerhalb eines von mindestens einem Steuerbereich auf dem Touchscreen, der zum Steuern der zweiten Anwendung definiert ist.

6. Verfahren nach einem der Ansprüche 1 bis 5, wobei die zweite Anwendung verschiedene Steuerzonen (511, 512, 513) auf dem Touchscreen (304) definiert und wobei eine verschiedene taktile Rückmeldung für eine erfasste Berührung in verschiedenen Steuerzonen (511, 512, 513) definiert ist.

7. Verfahren nach einem der Ansprüche 1 bis 6, wobei die ausgelöste taktile Rückmeldung von einem der folgenden Elemente bereitgestellt ist:
einem einzelnen Aktor (305);
mindestens einem Aktor, der dazu ausgebildet ist, eine taktile Rückmeldung und eine akustische Rückmeldung unter Verwendung verschiedener Frequenzbänder bereitzustellen;
einer Mehrzahl von Aktoren (305); und
einer Mehrzahl von Aktoren (305), die verschiedenen Bereichen des Touchscreens (304) zugeordnet sind, wobei die taktile Rückmeldung von mindestens einem der Aktoren, die einem vom Benutzer berührten Bereich des Touchscreens (304) zugeordnet sind, bereitgestellt ist.

8. Verfahren nach einem der Ansprüche 1 bis 7, wobei die ausgelöste taktile Rückmeldung durch das Umwandeln eines Tonsignals, das als eine Rückmeldung von der zweiten Anwendung erzeugt wird, in Schwingungen erlangt wird.

9. Verfahren nach einem der Ansprüche 1 bis 8, das ferner das Verwenden mindestens eines der folgenden Elemente umfasst:
ein anderes Frequenzband für eine Rückmeldung bezüglich der ersten Anwendung als für die ausgelöste taktile Rückmeldung bezüglich der zweiten Anwendung;
ein anderes Muster einer Rückmeldung bezüglich der ersten Anwendung als für die ausgelöste taktile Rückmeldung bezüglich der zweiten Anwendung; und
eine andere Hülle für eine Rückmeldung bezüglich der ersten Anwendung als für die ausgelöste taktile Rückmeldung bezüglich der zweiten Anwendung.

10. Verfahren nach einem der Ansprüche 1 bis 9, ferner umfassend
das Ausführen mindestens einer dritten Anwendung in dem Gerät; und
das Bereitstellen einer taktilen Rückmeldung bezüglich der mindestens dritten Anwendung auf einen Benutzer, der den Touchscreen berührt.

11. Vorrichtung (300, 303), die Einrichtungen (301, 302, 304, 305) zum Ausführen jedes der Schritte des Verfahrens nach einem der Ansprüche 1 bis 10 aufweist.

12. Vorrichtung (300) nach Anspruch 11, wobei die Vorrichtung mindestens eines der folgenden Elemente aufweist:
einen Touchscreen (304);
einen Aktor (305), der dazu ausgebildet ist, eine taktile Rückmeldung bereitzustellen; und
eine Mehrzahl von Aktoren (305), die verschiedenen Bereichen eines Touchscreens (304) zugeordnet und dazu ausgebildet sind, eine taktile Rückmeldung bereitzustellen.

13. Vorrichtung nach Anspruch 11 oder 12, wobei die Vorrichtung eines der folgenden Elemente ist:
ein mobiles Endgerät (300);
eine mobile Vorrichtung (300);
ein Mobiltelefon (300);
ein Personal Computer (300);
ein Chip (303), der dafür konfiguriert ist, in einem Gerät (300) verwendet zu werden; und
eine Komponente (303), die dafür konfiguriert ist, in einem Gerät (300) verwendet zu werden.

14. Computerprogrammcode, wobei der Computerprogrammcode bei Ausführung von einem Prozessor (301) bewirkt, dass mindestens eine Vorrichtung (300) jeden der Schritte des Verfahrens nach einem der Ansprüche 1 bis 10 ausführt.

## Revendications

1. Procédé comprenant :
la surveillance, par un appareil (300, 303), qu'un utilisateur touche ou non un écran tactile (304), pendant qu'une première application est active dans un dispositif (300) et déclenche une présentation visible relative à la première application sur l'écran tactile (304) et pendant qu'une deuxième application est active dans le dispositif (300) ; et
à la détection d'un toucher d'au moins un type sur l'écran tactile (304), la génération, par l'appareil (300, 303), d'une contre-réaction tactile relative à la deuxième application,
dans lequel
la contre-réaction tactile est l'une de différentes contre-réactions tactiles à un toucher détecté sur l'écran tactile (304) qui sont définies pour différentes notifications relatives à la deuxième application, et
dans lequel ledit toucher détecté entraîne une contre-réaction tactile différente en fonction du type de toucher, de l'emplacement du toucher et/ou de l'état du dispositif.

2. Procédé selon la revendication 1, dans lequel le toucher détecté d'au moins un type constitue une entrée de commande de la deuxième application.

3. Procédé selon la revendication 1 ou 2, dans lequel le toucher d'au moins un type comprend au moins l'un d'un :
tapotement ;
geste prédéterminé ;
balayage ;
balayage dans un sens prédéterminé ;
toucher appliqué avec une force prédéterminée ;
toucher dans une zone prédéterminée de l'écran tactile (304) ;
toucher d'un emplacement unique de l'écran tactile (304) ; et
toucher simultané d'au moins deux emplacements distincts de l'écran tactile (304).

4. Procédé selon l'une des revendications 1 à 3, comprenant en outre, à la détection du toucher d'au moins un type, l'une d'une :
activation d'une interface utilisateur pour la deuxième application ;
désactivation d'une interface utilisateur pour la deuxième application ;
commutation entre une interface utilisateur pour la première application et une interface utilisateur pour la deuxième application ;
modification d'au moins une propriété de la deuxième application associée au type de toucher détecté ; et
modification d'au moins une propriété de la deuxième application associée à une zone de commande dans laquelle le toucher est détecté.

5. Procédé selon l'une des revendications 1 à 4, dans lequel les différentes contre-réactions tactiles sont définies pour au moins deux d'une :
notification d'une occurrence d'un événement prédéterminé dans le cadre de la deuxième application ;
notification d'une détection d'un toucher d'un utilisateur sur l'écran tactile (304) ;
notification d'une détection d'un type de toucher d'un utilisateur sur l'écran tactile (304) qui est défini pour activer une interface utilisateur de la deuxième application ;
notification d'une détection d'un type de toucher d'un utilisateur sur l'écran tactile (304) qui est défini pour commander la deuxième application ;
notification de l'achèvement d'une action déclenchée par un toucher détecté d'un utilisateur sur l'écran tactile (304) ;
notification d'un déroulement d'une action déclenchée par un toucher détecté d'un utilisateur sur l'écran tactile (304) ;
notification d'une détection d'un toucher d'au moins un type d'utilisateur dans l'une d'au moins une zone de commande sur l'écran tactile qui est définie pour commander la deuxième application ; et
notification d'une détection d'un toucher d'au moins un type d'utilisateur en dehors de l'une d'au moins une zone de commande sur l'écran tactile qui est définie pour commander la deuxième application.

6. Procédé selon l'une des revendications 1 à 5, dans lequel la deuxième application définit différentes zones de commande (511, 512, 513) sur l'écran tactile (304) et dans lequel une contre-réaction tactile différente est définie pour un toucher détecté dans différentes zones de commande (511, 512, 513).

7. Procédé selon l'une des revendications 1 à 6, dans lequel la contre-réaction tactile est produite par l'un :
d'un actionneur unique (305) ;
d'au moins un actionneur configuré pour produire une contre-réaction tactile et une contre-réaction audible utilisant des bandes de fréquence différentes ;
d'une pluralité d'actionneurs (305) ; et
d'une pluralité d'actionneurs (305) associée à différentes zones de l'écran tactile (304), dans lequel la contre-réaction tactile est produite par au moins l'un des actionneurs associés à une zone de l'écran tactile (304) touchée par l'utilisateur.

8. Procédé selon l'une des revendications 1 à 7, dans lequel la contre-réaction tactile est obtenue en convertissant en vibrations un signal sonore généré en contre-réaction par la deuxième application.

9. Procédé selon l'une des revendications 1 à 8, comprenant en outre l'utilisation d'au moins l'une :
d'une bande de fréquences pour n'importe quelle contre-réaction relative à la première application différente de celle pour la contre-réaction tactile générée relative à la deuxième application ;
d'une configuration pour n'importe quelle contre-réaction relative à la première application différente de celle pour la contre-réaction tactile générée relative à la deuxième application ; et
d'une enveloppe pour n'importe quelle contre-réaction relative à la première application différente de celle pour la contre-réaction tactile générée relative à la deuxième application.

10. Procédé selon l'une des revendications 1 à 9, comprenant en outre
l'exécution d'une troisième application dans le dispositif ; et
la production d'une contre-réaction tactile relative à l'au moins une troisième application à un toucher d'un utilisateur sur l'écran tactile.

11. Appareil (300, 303) comprenant des moyens (301, 302, 304, 305) pour exécuter chacune des étapes du procédé selon l'une quelconque des revendications 1 à 10.

12. Appareil (300) selon la revendication 11, l'appareil comprenant au moins l'un :
d'un écran tactile (304) ;
d'un actionneur (305) configuré pour produire une contre-réaction tactile ; et
d'une pluralité d'actionneurs (305) associée à différentes zones d'un écran tactile (304) et
configurée pour produire une contre-réaction tactile.

13. Appareil selon la revendication 11 ou 12, l'appareil étant l'un :
d'un terminal mobile (300) ;
d'un dispositif mobile (300) ;
d'un téléphone mobile (300) ;
d'un ordinateur personnel (300) ;
d'une puce (303) configurée pour être utilisée dans un dispositif (300) ; et
d'un composant (303) configuré pour être utilisé dans un dispositif (300).

14. Code de programme informatique, le code de programme informatique, à son exécution par un processeur (301), amenant au moins un appareil (300) à réaliser chacune des étapes du procédé selon l'une quelconque des revendications 1 à 10.
